# FASCICULE DE BREVET EUROPEEN

(11) **EP 1 182 092 B1**
(45) Date de publication et mention de la délivrance du brevet: **17.03.2004**
(21) Numéro de dépôt: 01402074.7
(22) Date de dépôt: 01.08.2001
(51) Int. Cl.: B60R 16/02, H01M 2/10

(54) **Agencement pour le montage d'une unité électrique d'un véhicule automobile**
Anordnung einer Elektrikeinheit in einem Kraftfahrzeug
Arrangement for mounting an electrical unit in a vehicle

(30) Priorité: 25.08.2000 FR 0010932
(43) Date de publication de la demande: 27.02.2002
(73) Titulaire: Renault s.a.s., 92100 Boulogne Billancourt (FR)
(72) Inventeur: Fumex, Michel, 78460 Chevreuse (FR); Breton, Gilles, 91400 Saclay (FR); Journiac, Christian, 78500 Sartrouville (FR); Lavat, Hervé, 27940 Aubevoye (FR); Vacca, Christian, 91400 Orsay (FR)
(74) Mandataire: Davies, Owen Robert Treharne

(56) Documents cités:
- GB-A- 208 035
- JP-A- 10 250 622
- US-A- 5 484 667
- US-A- 5 639 571
- US-A- 5 777 843
- US-A- 5 882 213

## Description

L'invention concerne un agencement pour le montage d'une unité électronique d'un véhicule automobile.

L'invention concerne plus particulièrement un agencement pour le montage d'une unité électronique d'un véhicule automobile qui comporte au moins un élément de structure de caisse qui porte une batterie.

On connaît de nombreux exemples d'agencement de ce type.

Dans la plupart de ceux-ci, l'unité électronique, qui est notamment une unité de contrôle du moteur, est fixée sur une paroi du compartiment moteur, par exemple directement sur un des longerons, ou sur un passage de roue lié au longeron, ou encore sur un tablier du véhicule qui sépare le compartiment moteur d'un habitacle du véhicule. Par ailleurs, l'unité électronique de contrôle du moteur comporte généralement un dispositif d'antidémarrage ayant pour but d'empêcher le vol du véhicule.

Cette configuration n'offre aucune sécurité quand à l'inviolabilité de l'unité électronique.

En effet, dans cette configuration, un individu qui souhaiterait dérober le véhicule pourrait facilement, après avoir soulevé le capot du véhicule, avoir facilement accès à l'unité électronique de contrôle du moteur, et, par suite, inhiber le dispositif d'antidémarrage, soit en intervenant sur l'unité électronique de contrôle du moteur, soit en y substituant une autre unité électronique de contrôle du moteur dépourvue de dispositif d'antidémarrage.

Pour remédier à cet inconvénient, l'invention propose un agencement pour le montage d'une unité électronique qui limite l'accès à celle-ci.

Dans ce but, l'invention propose un agencement du type décrit précédemment, caractérisé en ce que la batterie est fixée sur l'élément de structure par l'intermédiaire d'un organe de fixation dont un logement, qui est agencé sous la batterie, reçoit, à des fins de protection contre le vol, l'unité électronique du véhicule.

Selon d'autres caractéristiques de l'invention :
- l'organe de fixation comporte au moins un pied inférieur qui comporte le logement et un boîtier intermédiaire de réception de la batterie qui est fixé au dessus du pied inférieur ;
- le pied inférieur comporte une paire de cloisons latérales dans l'épaisseur desquelles sont agencés des perçages pour le passage des vis de fixation de l'organe sur l'élément de structure ;
- l'unité électronique est fixée dans un logement du pied inférieur, délimité par les cloisons, par l'intermédiaire d'un cavalier qui présente sensiblement la forme d'un U couché suivant la direction longitudinale et qui reçoit entre ses branches inférieure et supérieure des faces inférieure et supérieure de l'unité électronique ;
- un connecteur de l'unité électronique est bloqué dans ses mouvements par les branches inférieures et supérieure et par une branche verticale du cavalier ;
- la branche supérieure du cavalier affleure au niveau du plan de raccordement entre le pied inférieur et le boîtier intermédiaire, et comporte au moins deux oreilles transversales opposées qui s'étendent jusqu'aux cloisons du pied inférieur et dont des perçages sont alignés coaxialement à ceux des cloisons du pied inférieur et d'un fond du boîtier intermédiaire pour. le passage des vis de fixation de l'organe ;
- les vis de fixation de l'organe sont de type non dévissable ;
- le cavalier est réalisé en un matériau élastique pour coincer l'unité électronique entre ses branches inférieure et supérieure ;
- l'ouverture du logement du pied inférieur est tournée vers le boîtier intermédiaire, pour fermer le logement lors du montage du boîtier intermédiaire sur le pied inférieur.

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble en perspective de la moitié d'un élément longitudinal de structure de caisse du véhicule automobile équipé d'un organe de fixation de la batterie selon l'invention,
- la figure 2 est une vue de détail en perspective du pied inférieur de l'organe de fixation,
- la figure 3 est une vue selon la figure 2 du pied inférieur de la figure 1 recevant l'unité électronique du véhicule,
- la figure 4 est une vue de détail en perspective de l'organe de fixation représentant le boîtier intermédiaire monté sur le pied inférieur, et
- la figure 5 est une vue selon la figure 4 avec arrachement illustrant le boîtier intermédiaire recevant la batterie et coiffé de son couvercle supérieur.

Dans la description qui va suivre, des chiffres de référence identiques désignent des pièces identiques ou ayant des fonctions similaires.

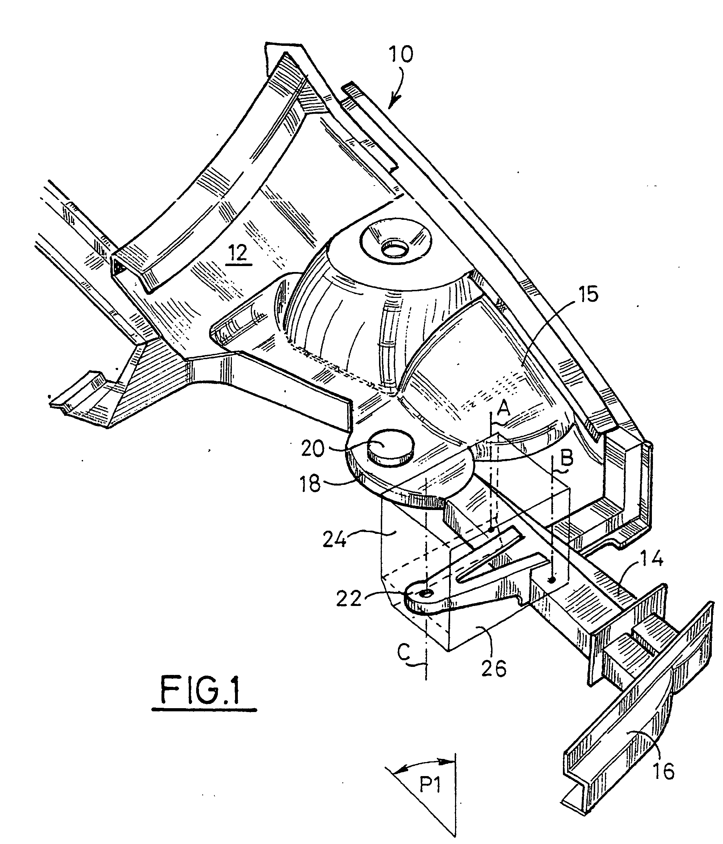

On a représenté à la figure 1 la moitié 12 d'un élément 10 longitudinal de structure de caisse formant compartiment pour un moteur (non représenté) du véhicule. Chaque moitié 12 est symétrique de la moitié opposée par rapport à un plan "P₁" longitudinal vertical.

De manière connue, l'élément 10 de structure de caisse comporte deux longerons 14 sensiblement longitudinaux et parallèles, qui sont notamment réunis par une traverse avant 16, et dont au moins un porte des organes mécaniques du véhicule. Par exemple, le longeron 14 qui est représenté à la figure 1 peut comporter une potence 18 qui s'étend transversalement à partir dudit longeron 14 et qui porte un élément 20 élastique ou "silentbloc" pour la fixation une boîte de vitesses (non représentée) du véhicule. Une joue 15 formant passage de roue s'étend verticalement à partir du longeron 14.

De manière connue, une batterie 24 est fixée sur l'élément 10 de structure de caisse.

Ainsi, dans le mode de réalisation qui a été représenté sur les figures, et de façon non limitative de l'invention, la batterie 24, représentée en traits fantômes, est fixée sur le longeron 14 par des vis (non représentées) d'axes verticaux A et B et est aussi fixée sur un support 22, qui s'étend transversalement à partir dudit longeron 14 vers l'intérieur du compartiment moteur, en un point de fixation par une vis (non représentée) d'axe vertical C agencée à l'extrémité du support 22.

Plus particulièrement, la batterie 24 est fixée sur l'élément 10 de structure de caisse par l'intermédiaire d'un organe 26 de fixation dont un logement, qui est agencé sous la batterie 24, reçoit, à des fins de protection contre le vol, une unité électronique du véhicule.

Comme l'illustre la figure 1, l'organe 26 est fixé sur le longeron 14 par les vis d'axes verticaux A et B et il est fixé sur le support 22 par la vis d'axe vertical C agencée à l'extrémité du support 22.

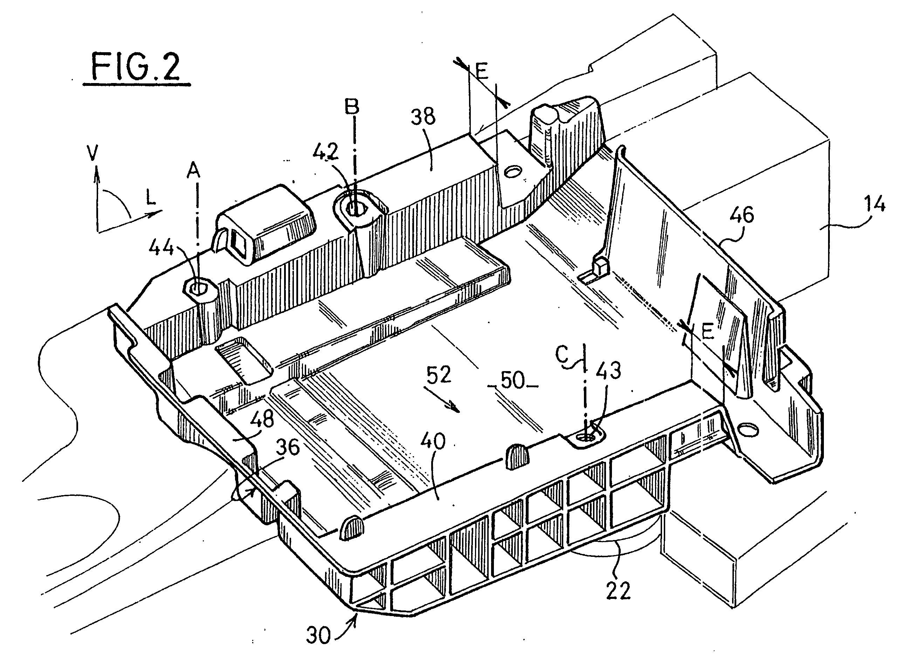

L'organe 26 de fixation est représenté plus en détail aux figures 2 à 5.

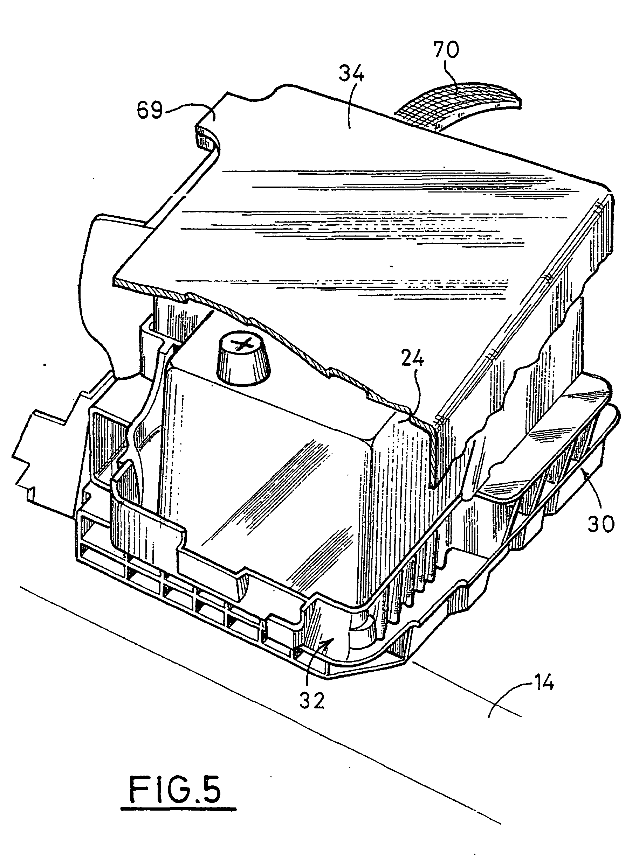

Comme l'illustre la figure 5, l'organe 26 de fixation comporte, du bas vers le haut, au moins un pied inférieur 30 qui comporte le logement, un boîtier intermédiaire 32 de réception de la batterie 24 qui est fixé au dessus du pied inférieur 30, et un couvercle supérieur 34 qui ferme le boîtier intermédiaire 32.

Le pied inférieur 30 est représenté dans le détail à la figure 2.

Le pied inférieur 30 présente sensiblement la forme d'un parallélépipède qui est fixé dans le sens de sa longueur le long du longeron 14 et sur le support 22. En particulier, le pied inférieur 30 est réalisé dans un matériau plastique sous la forme d'un parallélépipède creux, ouvert vers le haut à son extrémité supérieure 36, et qui comporte une première cloison latérale 38 et une deuxième cloison latérale 40 qui s'étendent sensiblement suivant la direction longitudinale "L".

Les première et deuxième cloisons latérales 38 et 40 sont d'épaisseur "E" élevée, et des perçages de direction verticale "V" y sont agencés.

La première cloison latérale 38 comporte deux perçages 42 et 44 pour la fixation sur le longeron 14, et la deuxième cloison latérale 40 comporte un perçage 46 pour la fixation sur le support 22. Les perçages 42 et 44 sont agencés au droit de perçages (non représentés) du longeron 14 d'axes respectifs B et A, et le perçage 46 est agencé au droit d'un perçage (non représenté) du .support 22 d'axe C. La fixation par vissage peut par exemple être réalisé par des vis (non représentées) qui traversent les perçages 42, 44, et 46 et qui sont reçues dans des écrous prisonniers agencés en-dessous des perçages du longeron 14 et du support 22.

Le pied inférieur 30 comporte aussi deux cloisons transversales avant 46 et arrière 48 qui délimitent, en conjonction avec la première cloison latérale 38, la deuxième cloison latérale 40 et un fond horizontal 50, le logement 52 qui est destiné à recevoir l'unité électronique 28 du véhicule et qui débouche donc vers le haut.

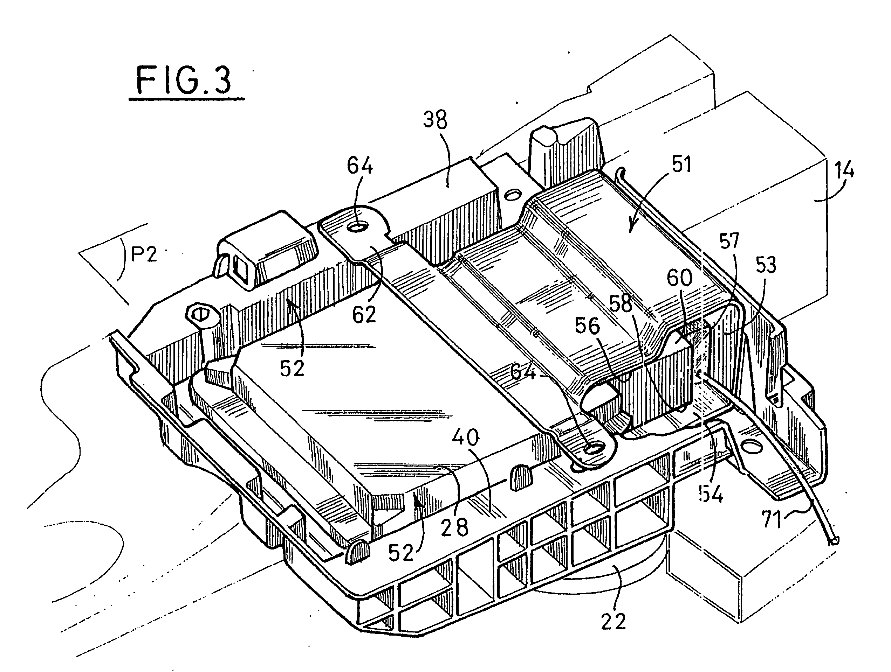

Comme l'illustre la figure 3, l'unité électronique 28 du véhicule est de forme sensiblement parallélépipédique et elle est reçue dans le logement 52 qui est de forme complémentaire de celle-ci.

L'unité électronique 28 est fixée dans le logement 52 du pied inférieur 30 par l'intermédiaire d'un cavalier 51. Le cavalier 51 présente sensiblement la forme d'un U couché suivant la direction longitudinale "L" et il reçoit entre ses branches inférieure 54 et supérieure 56 des faces inférieure 58 et supérieure 60 de l'unité électronique 28.

En particulier, Le cavalier 51 est fixé au pied inférieur 30 par l'intermédiaire de sa branche supérieure 54 qui affleure au niveau du plan "P₂" supérieur du pied inférieur 30. La branche supérieure 54 du cavalier 51 comporte deux oreilles transversales 62 opposées qui s'étendent jusqu'aux cloisons 38 et 40 et dont des perçages 64 sont alignés coaxialement avec les perçages 42 et 46 des cloisons 38 et 40 pour le passage des vis de fixation de l'organe 26. Cette disposition n'est pas limitative de l'invention et le cavalier 51 pourrait comporter un nombre supérieur d'oreilles transversales et de perçages associés.

Le cavalier 51 est réalisé en un matériau élastique, par exemple un acier du type "acier à ressort" pour coincer l'unité électronique 28 entre ses branches inférieure 54 et supérieure 56.

De plus, la branche inférieure 54, la branche supérieure 56 et une branche verticale 53 qui forment le U du cavalier 51 bloquent les mouvements de démontage d'un connecteur 57 du boîtier électronique 28 en formant une ceinture métallique autour de celui-ci. De la sorte, il est impossible d'accéder au connecteur 57 pour y brancher une autre unité électronique sans couper son câble 71 et le rendre ainsi inutilisable.

Par ailleurs, les vis (non représentées) qui sont reçues dans les perçages 64 sont de type non dévissables de façon à permettre un montage inviolable du cavalier 51 sur le pied 30.

On remarquera que, le cavalier 51 étant seulement fixé au pied inférieur 30 par l'intermédiaire de sa branche supérieure 56, sa branche inférieure peut ne pas être au contact direct du fond 50 du pied inférieur 30, ce qui permet avantageusement de découpler en vibrations l'unité électronique 28 de l'organe de fixation 26 en la suspendant par la branche supérieure 56 du cavalier 51 dans le but d'améliorer sa fiabilité de fonctionnement.

Le plan "P₂" supérieur du pied inférieur 30 est aussi le plan de raccordement entre le pied inférieur 30 et le boîtier intermédiaire 32. Le boîtier intermédiaire 32 est aussi parallélépipédique et présente des dimensions adaptées, complémentaires de celles de la batterie 24, comme on l'a représenté à la figure 5.

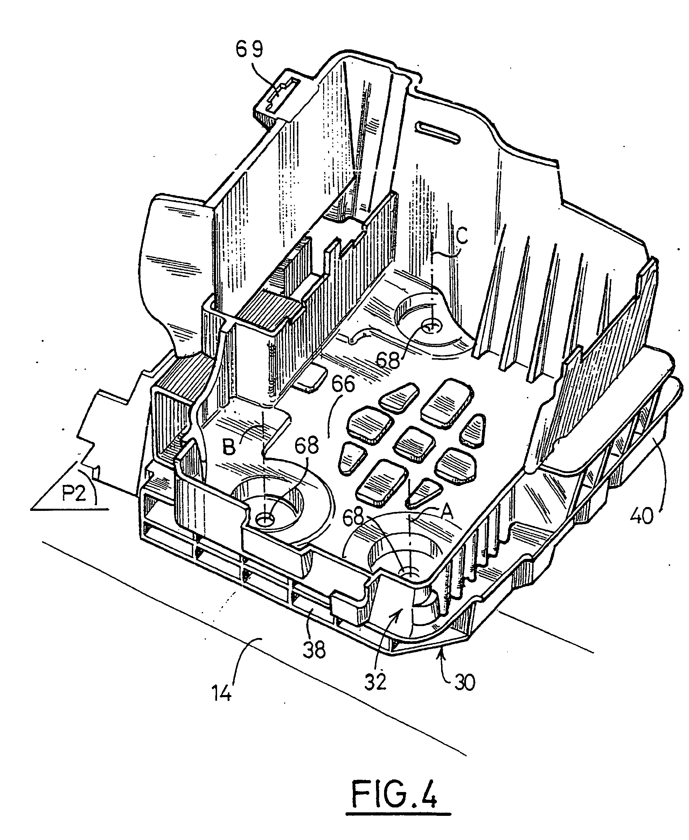

Comme l'illustre la figure 4, le boîtier intermédiaire 32 est monté directement sur le pied inférieur 30, son fond 66 horizontal reposant sur les parois latérales 38 et 40 précédemment décrites.

Le fond 66 du boîtier intermédiaire 32 comporte des perçages 68 qui sont agencés au droit des perçages 42, 44, et 46 d'axes respectifs B, A, C du pied inférieur 30. De la sorte, la fixation du boîtier intermédiaire 32 sur le pied inférieur 30 peut être réalisée à l'aide des vis qui sont destinées à fixer le pied inférieur sur le longeron 14 et sur le support 22.

Une fois monté, le fond 66 du boîtier intermédiaire 32 obture complètement l'ouverture du logement 52, ce qui condamne l'accès au module électronique 28 précédemment décrit.

Comme l'illustre la figure 5, la batterie 24 est reçue dans le boîtier intermédiaire 32 et celui-ci est fermé par le couvercle 34, par exemple au moyen d'éléments rapides 69 de fixation du boîtier intermédiaire 32 qui reçoivent des pattes conformes (non représentées) du couvercle 34.

Avantageusement, le couvercle 34 comporte au moins une fente (non représentée) permettant le passage d'un câble 70 ou d'une tresse qui relie la batterie 24 au circuit électrique du véhicule.

L'invention permet donc avantageusement d'assurer l'inviolabilité de l'unité électronique 28, en rendant son accès quasiment impossible du fait du temps de démontage élevé de la batterie 24 que nécessiterait une telle opération. L'invention permet aussi d'empêcher à un éventuel voleur de contourner la difficulté en substituant une autre unité électronique à l'unité 28, du fait de l'inaccessibilité complète du connecteur 57.

Le mode de réalisation qui a été précédemment décrit n'est pas limitatif de l'invention et l'invention trouve aussi à s'appliquer à un véhicule automobile équipé d'un groupe motopropulseur agencé en position arrière ou centrale.

## Revendications

1. Agencement pour le montage d'une unité électronique (28) d'un véhicule automobile qui comporte au moins un élément (10) de structure de caisse qui porte une batterie (24), **caractérisé en ce que** la batterie (24) est fixée sur l'élément de structure (10) par l'intermédiaire d'un organe (26) de fixation dont un logement (52), qui est agencé sous la batterie (24), reçoit, à des fins de protection contre le vol, l'unité électronique (28) du véhicule.

2. Agencement selon la revendication précédente, **caractérisé en ce que** l'organe (26) de fixation comporte au moins un pied inférieur (30) qui comporte le logement (52) et un boîtier (32) intermédiaire de réception de la batterie (24) qui est fixé au dessus du pied inférieur (30).

3. Agencement selon la revendication précédente, **caractérisé en ce que** le pied inférieur (30) comporte une paire de cloisons (38, 40) latérales dans l'épaisseur (E) desquelles sont agencés des perçages (42, 44, 46) pour le passage des vis de fixation de l'organe (26) sur l'élément de structure (10).

4. Agencement selon la revendication précédente, **caractérisé en ce que** l'unité électronique (28) est fixée dans un logement (52) du pied inférieur (30), délimité par les cloisons (38, 40), par l'intermédiaire d'un cavalier (51) qui présente sensiblement la forme d'un U couché suivant la direction longitudinale (L) et qui reçoit entre ses branches inférieure (54) et supérieure (56) des faces inférieure (58) et supérieure (60) de l'unité électronique (28).

5. Agencement selon la revendication précédente, **caractérisé en ce qu'**un connecteur (57) de l'unité électronique (28) est bloqué dans ses mouvements par les branches inférieures (54), supérieure (56) et par une branche verticale (53) du cavalier.

6. Agencement selon l'une des revendications 4 ou 5, **caractérisé en ce que** la branche supérieure (56) du cavalier (51) affleure au niveau du plan (P₂) de raccordement entre le pied inférieur (30) et le boîtier intermédiaire (32), et comporte au moins deux oreilles transversales opposées (62) qui s'étendent jusqu'aux cloisons (38, 40) du pied inférieur (30) et dont des perçages (64) sont alignés coaxialement à ceux des cloisons (38, 40) du pied inférieur (30) et d'un fond (66) du boîtier intermédiaire (32) pour le passage des vis de fixation de l'organe (26).

7. Agencement selon la revendication précédente, **caractérisé en ce que** les vis de fixation de l'organe (26) sont de type non dévissable.

8. Agencement selon l'une des revendications 4 à 7, **caractérisé en ce que** le cavalier (51) est réalisé en un matériau élastique pour coincer l'unité électronique (28) entre ses branches inférieure (54) et supérieure (56).

9. Agencement selon l'une quelconque des revendications 3 à 8, **caractérisé en ce que** l'ouverture du logement (52) du pied inférieur (30) est tournée vers le boîtier intermédiaire (32), pour fermer le logement (52) lors du montage du boîtier intermédiaire (32) sur le pied inférieur (30).

## Patentansprüche

1. Anordnung zur Montage einer elektronischen Einheit (28) eines Kraftfahrzeugs, das mindestens ein Element (10) von der Struktur eines Kastens aufweist, das eine Batterie (24) trägt, **dadurch gekennzeichnet, dass** die Batterie (24) auf dem Strukturelement (10) über ein Instrument (26) zur Befestigung befestigt ist, von dem ein Unterbringungsraum (52), der unter der Batterie (24) angeordnet ist, zum Zweck des Schutzes gegen Diebstahl, die elektronische Einheit (28) des Fahrzeugs aufnimmt.

2. Anordnung gemäß dem vorhergehenden Anspruch, **dadurch gekennzeichnet, dass** das Instrument (26) zur Befestigung mindestens einen unteren Sockel (30) aufweist, der einen Unterbringungsraum (52) aufweist und ein Zwischengehäuse (32) zur Aufnahme der Batterie (24), die oberhalb des unteren Sockels (30) angebracht ist.

3. Anordnung gemäß dem vorhergehenden Anspruch, **dadurch gekennzeichnet, dass** der untere Sockel (30) ein Paar seitliche Trennwände (38, 40) aufweist, in deren Dicke (E) Bohrungen (42, 44, 46) angeordnet sind für die Durchlass der Schrauben zur Befestigung des Instruments (26) auf dem Strukturelement (10).

4. Anordnung gemäß dem vorhergehenden Anspruch, **dadurch gekennzeichnet, dass** die elektronische Einheit (28) in einem Unterbringungsraum (52) des unteren Sockels (30) befestigt ist, der durch die Trennwände (38, 40) begrenzt wird, über einen Reiter (51), der fast die Form eines entlang der Längsrichtung (L) liegenden U aufweist und der zwischen seinen unteren (54) und oberen (56) Abschnitten die unteren (58) und oberen (60) Seiten der elektronischen Einheit (28) aufnimmt.

5. Anordnung gemäß dem vorhergehenden Anspruch, **dadurch gekennzeichnet, dass** ein Verbindungsstück (57) der elektronischen Einheit (28) in seinen Bewegungen blockiert ist durch die unteren (54) und oberen (56) Abschnitte und durch einen vertikalen Abschnitt (53) des Reiters.

6. Anordnung gemäß einem der Ansprüche 4 oder 5, **dadurch gekennzeichnet, dass** der obere Abschnitt (56) des Reiters (51) anliegt an der Ebene der Verbindung zwischen dem unteren Sockel (30) und dem Zwischengehäuse (32) und mindestens zwei gegenüberliegende transversale Ohren (62) aufweist, die sich bis zu den Trennwänden (38, 40) des unteren Sockels (30) erstrecken und von denen Bohrungen (64) koaxial mit denjenigen der Trennwände (38, 40) des unteren Sockels (30) und denjenigen eines Bodens (66) des Zwischengehäuses (32) ausgerichtet sind, für den Durchlass der Schrauben zur Befestigung des Instruments (26).

7. Anordnung gemäß dem vorhergehenden Anspruch, **dadurch gekennzeichnet, dass** die Schrauben zur Befestigung des Instruments (26) von nicht aufschraubbarem Typ sind.

8. Anordnung gemäß einem der Ansprüche 4 bis 7, **dadurch gekennzeichnet, dass** der Reiter (51) mit einem elastischen Material realisiert wird, um die elektronische Einheit (28) zwischen seinen unteren (54) und oberen (56) Abschnitten einzuklemmen.

9. Anordnung gemäß einem der Ansprüche 3 bis 8, **dadurch gekennzeichnet, dass** die Öffnung des Unterbringungsraums (52) des unteren Sockels (30) gegen das Zwischengehäuse (32) gedreht ist, um den Unterbringungsraum (52) bei der Montage des Zwischengehäuses (32) auf dem unteren Sockel zu schließen.

## Claims

1. An arrangement for the assembly of an electronic unit (28) of an automobile vehicle which comprises at least one bodywork structure member (10) bearing a battery (24), **characterised in that** the battery (24) is secured to the structural member (10) by means of a fastening member (26), a housing (52) of which, disposed below the battery (24), receives the electronic unit (28) of the vehicle for the purposes of protection against theft.

2. An arrangement as claimed in the preceding claim, **characterised in that** the fastening member (26) comprises at least one lower foot (30) which comprises the housing (52) and an intermediate housing (32) for the battery (24) which is secured above the lower foot (30).

3. An arrangement as claimed in the preceding claim, **characterised in that** the lower foot (30) comprises a pair of lateral partitions (38, 40) in the thickness (E) of which drill holes (42, 44, 46) are disposed for the passage of screws for fastening the member (26) on the bodywork member (10).

4. An arrangement as claimed in the preceding claim, **characterised in that** the electronic unit (28) is secured in a housing (52) of the lower foot (30), bounded by the partitions (38, 40), by means of a staple (51) substantially in the shape of a sideways U in the longitudinal direction (L) and which receives the lower and upper surfaces (58, 60) of the electronic unit (28) between its lower and upper arms (54, 56).

5. An arrangement as claimed in the preceding claim, **characterised in that** a connector (57) of the electronic unit (28) is locked against movement by the lower and upper arms (54, 56) and by a vertical arm (53) of the staple.

6. An arrangement as claimed in one of claims 4 or 5, **characterised in that** the upper arm (56) of the staple (51) is flush with the plane of connection (P2) between the lower foot (30) and the intermediate housing (32) and comprises at least two opposing transverse lugs (62) which extend up to the partitions (38, 40) of the lower foot (30) and whose drill holes (64) are aligned coaxially with those of the partitions (38, 40) of the lower foot (30) and a base (66) of the intermediate housing (32) for the passage of the screws for fastening the member (26).

7. An arrangement as claimed in the preceding claim, **characterised in that** the screws for fastening the member (26) are of the unscrewable type.

8. An arrangement as claimed in one of claims 4 to 7, **characterised in that** the staple (51) is made from an elastic material so that the electronic unit (28) can be wedged between its lower and upper arms (54, 56).

9. An arrangement as claimed in any one of claims 3 to 8, **characterised in that** the opening of the housing (52) of the lower foot (30) faces towards the intermediate housing (32) in order to close this housing (52) during assembly of the intermediate housing (32) on the lower foot (30).
